## Europäisches Patentamt
## European Patent Office
## Office européen des brevets

(11) Veröffentlichungsnummer: **0 102 611**
**B1**

(12) **EUROPÄISCHE PATENTSCHRIFT**

(45) Veröffentlichungstag der Patentschrift: **28.09.88**

(51) Int. Cl.⁴: **B 60 H 1/00**

(21) Anmeldenummer: **83108528.7**

(22) Anmeldetag: **30.08.83**

(54) Heiz- und/oder Klimaanlage für Kraftfahrzeuge.

(30) Priorität: **04.09.82 DE 3232957**

(43) Veröffentlichungstag der Anmeldung:
**14.03.84 Patentblatt 84/11**

(45) Bekanntmachung des Hinweises auf die
Patenterteilung:
**28.09.88 Patentblatt 88/39**

(84) Benannte Vertragsstaaten:
**DE FR GB IT SE**

(56) Entgegenhaltungen:
**EP-A-0 058 416**
**DE-A-2 530 133**
**DE-A-2 836 800**
**DE-A-3 007 407**
**DE-A-3 036 806**
**FR-A-2 437 312**
**US-A-2 729 158**
**US-A-2 860 567**

(73) Patentinhaber: **BAYERISCHE MOTOREN WERKE
Aktiengesellschaft
Postfach 40 02 40 Petuelring 130 - AJ-36
D-8000 München 40 (DE)**

(72) Erfinder: **Busch, Lothar, Ing. (grad)
Frauwiesenweg 27
D-8031 Gilching (DE)**
Erfinder: **Orth, Walter, Dipl.-Ing.
Parzivalstrasse 10
D-8000 München 40 (DE)**

(74) Vertreter: **Bücken, Helmut et al
Bayerische Motoren Werke Aktiengesellschaft
Postfach 40 02 40 Petuelring 130 - AJ-30
D-8000 München 40 (DE)**

Courier Press, Leamington Spa, England.

**Beschreibung**

Die Erfindung bezieht sich auf eine Heiz- und/oder Klimaanlage für Kraftfahrzeuge einer Bauart mit den Merkmalen nach dem Oberbegriff des Patentanspruches 1.

Bei derartigen Anlagen soll eine Temperaturschichtung bzw. eine Temperaturabsenkung des Insassen-Kopfbereiches gegenüber dem Fußraum erreicht werden. Eine bekannte Anlage dieser Bauart nach DE-A-28 36 800 erreicht dies mit Hilfe einer Zweiflügelklappe als Steuereinrichtung. Ausgehend von einer Endstellung der Zweiflügelklappe, in der der Warmluftstrom vollständig unterbrochen und die Kaltluft eine maximale Menge erreicht, wird beim Schwenken der Zweiflügelklappe eine unter Abnahme der Kaltluftmenge zunehmende Warmluftmenge eingestellt. Erst wenn die Öffnung für die Kaltluft geschlossen ist, beginnt die Verringerung der Warmluftmenge ebenfalls bis zum Verschluß der zugehörigen Öffnung.

Die bekannte Anlage ist wegen des Platzbedarfs der Zweiflügelklappe besonders voluminös. Darüber hinaus ist sie auch strömungstechnisch für den höchsten Luftdurchsatz ungünstig da der die Warmluft steuernde Flügel nahezu ständig senkrecht im Luftstrom steht. Schließlich läßt sich die Durchflußmenge zum Innenraum-Kopfbereich nur dann steuern, wenn ausschließlich Warmluft zugeführt wird. Die für eine Temperaturschichtung besonders wichtige Möglichkeit, den Luftstrom zum InsassenKopfbereich zugleich und unabhängig von einander einerseits in seiner Menge zu verstellen und andererseits in seiner Temperatur gegenüber den Luftströmen zum Fußraum und zur Scheiben-Entfrostung abzusenken, ist bei der bekannten Anlage nicht gegeben.

Für luftgesteuerte Heizungsanlagen zeigt die US-A-2,860,567 eine Klappenanordnung. Hierbei erfüllt die Schwenkklappe neben einer Temperatur-Mischaufgabe die zusätzliche Aufgabe, den Warmluftkanal auch vollständig zu sperren, da anders eine Temperatursteuerung wegen fehlender sonstiger Steuerorgane nicht möglich ist. Eine gegenseitige Abhängigkeit der einzelnen Klappen eines Kanales ist nicht vorgesehen.

Der Erfindung liegt die Aufgabe zugrunde, eine Heizund/oder Klimaanlage der bekannten Bauart so weiterzubilden, daß bei geringem konstruktiven Aufwand und bei geringem Bauvolumen variable Temperatur- und Mengen-Einstellungen für den Luftstrom zum Insassen-Kopfbereich strömungstechnisch günstig ermöglicht werden.

Die Erfindung löst diese Aufgabe durch die Ausbildung der bauartgemäßen Anlage mittels der kennzeichnenden Merkmale des Patentanspruches 1. Durch diese Ausbildung ist mit geringem Steuer-Bauaufwand einerseits für die wasserseitige Temperatur-Steuerung der Luftströme zum Fußraum und zur Scheiben-Entfrostung und andererseits für die luftseitige Steuerung der Temperatur und die Mengensteuerung des Luftstromes zum Insassen-Kopfbereich eine in ihrer Temperatur beliebig einstellbare Luftströmung zum Insassen-Kopfbereich bei zusätzlich geringem Bauraumbedarf gegeben. Darüber hinaus ist bei dieser Ausbildung eine in ihrer Temperatur beliebig fest eingestellte Luftströmung zum Insassen-Kopfbereich in ihrer Menge beliebig veränderbar, ohne dabei gleichzeitig die eingestellte Temperatur zu verändern.

Weiterhin wird durch die erfindungsgemäße Ausbildung ausgeschlossen, daß bei zumindest weitgehend geschlossenem Drosselorgan und Misch-Einstellung des Steuerorgans Kaltluft vom Bypass durch die Wechsel-Eintrittsöffnungen des Steuerorganes in die Luftaustrittsseite des Wärmetauschers gelangen und sich damit den Luftströmen zur Scheiben-Entfrostung und zum Fußraum unter Temperatur-Absenkung beimischen kann.

In der Zeichnung ist ein Ausführungsbeispiel der Erfindung dargestellt. Es zeigen:

Fig. 1 eine Heizanlage für Kraftfahrzeuge mit Temperaturschichtung zwischen Insassen-Kopfbereich und Fußraum in schematischer Schnitt-Darstellung.

Fig. 2 ein Diagramm, das die Einstellmöglichkeit der zum Insassen-Kopfbereich geführten Luftströmung bezüglich Menge und Temperatur darstellt, und

Fig. 3 die Erweiterung der Anlage nach Fig. 1 zu einer Klimaanlage.

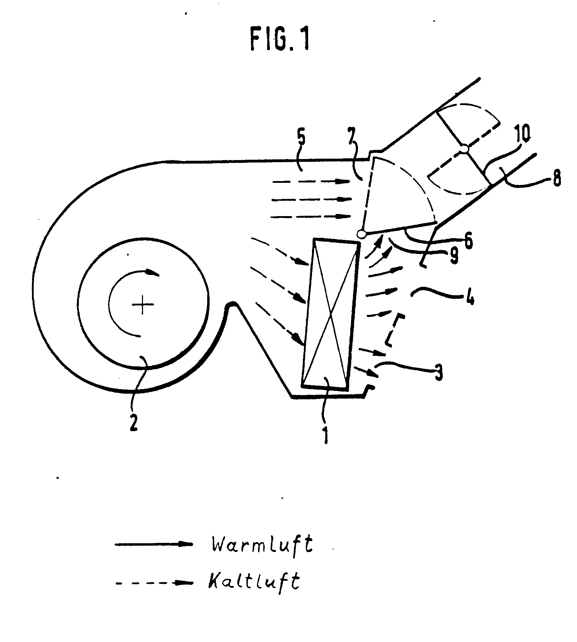

Die in Fig. 1 schematisch gezeigte Heizanlage für Kraftfahrzeuge enthält einen Wärmetauscher 1, dem über ein Gebläse 2 Frisch-und/oder Umluft zugeführt wird. Die aus dem Wärmetauscher 1 austretende, je nach Einstellung nicht dargestellter, üblicher Steuerventile für den Flüssigkeits-Durchsatz durch den Wärmetauscher 1 erwärmte Luft strömt über Öffnungen 3 und 4 zum Fußraum bzw. zu nicht dargestellten Entfrostungsdüsen und damit in einen Fahrzeug-Innenraum.

Parallel zum Wärmetauscher 1 verläuft ein Bypass 5, der durch ein Steuerorgan in Form einer Schwenkklappe 6 gesteuert ist. In ihrer ununterbrochen dargestellten einen Endlage gibt die Schwenkklappe 6 eine Öffnung 7 des Bypass 5 zu einem Kanal 8 frei, an dessen nicht dargestelltem Ende eine Belüftungsöffnung zum Insassen-Kopfbereich des Fahrzeuginnenraumes liegt. In dieser Lage verschließt die Schwenkklappe 6 eine Eintrittsöffnung 9 für Warmluft aus dem Wärmetauscher 1 in den Kanal 8. In der anderen, unterbrochen dargestellten Endlage verschließt die Schwenkklappe 6 die Eintrittsöffnung 7 und gibt die Eintrittsöffnung 9 vollständig frei.

An beliebiger Stelle innerhalb des Kanals 8 ist ein Drosselorgan in Form einer Sperrklappe 10 angeordnet, die unabhängig von der Schwenkklappe 6 betätigt werden kann. Sie kann zwischen einer unterbrochen dargestellten Stellung, in der sie den Querschnitt des Kanals vollständig freigibt. und einer ununterbrochen dargestellten Stellung, in der sie den Kanal vollständig absperrt, verschwenkt werden. Mit Hilfe der Schwenkklappe 6 kann die Temperatur der in den Kanal 8 gelangenden Luftströmung beliebig zwischen zwei Extremwerten eingestellt werden.

Der eine ist gleich der Temperatur der Luft im Bypass 5 und liegt dann vor, wenn die Schwenkklappe 6 in der ununterbrochen dargestellten Stellung liegt. Der Luftstrom im Kanal 8 zum Insassen-Kopfbereich besitzt dann dieselbe Temperatur wie der Luftstrom zum Fußraum und zur Scheiben-Entfrostung durch die Öffnungen 3 bzw. 4, wenn die Schwenkklappe 6 in der unterbrochen dargestellten Stellung steht. Durch beliebig einstellbare Zwischenstellungen der Schwenkklappe 6 kann die Temperatur des Luftstromes im Kanal 8 zum Insassen-Kopfbereich in den angegebenen Grenzen verändert werden.

Neben einer für die Insassen vorteilhaften Temperaturschichtung mit kälterem Luftstrom zum Insassen-Kopfbereich als zum Fußraum kann mit Hilfe der Sperrklappe 10 eine Mengensteuerung der zum Insassen-Kopfbereich ausströmenden Luft vorgenommen werden. Diese Steuerung kann bei beliebiger Einstellung der Schwenkklappe 6 und ohne Änderung der durch diese bestimmte Temperatur vorgenommen werden.

Bei Einstellungen der Sperrklappe 10, bei denen nur eine verhältnismäßig geringe Luftmenge von beispielsweise 30% der Maximalmenge zum Insassen-Kopfbereich gelangt, kann bei weitgehendem Verschließen der Sperrklappe 10 eine Zwangssteuerung der Schwenkklappe 6 einsetzen. Diese beispielsweise mit Hilfe von Bowdenzügen bzw. bei motorischem Antrieb der Klappen 6 und 10 auf schaltungstechnische Weise realisierte Maßnahme besteht darin, daß bei weiterem Schließen der Sperrklappe 10 die Schwenkklappe 6 zwangsweise in die ununterbrochen dargestellte Schließ-Endlage bewegt wird. Damit wird die Eintrittsöffnung 9 abgesperrt und eine Gegenströmung nicht erwärmter Luft aus dem Bypass 5 zu den Öffnungen 3 und 4 mit unerwünschter Temperaturabsenkung der Luftströme zum Fußraum und zur Scheiben-Entfrostung vermieden.

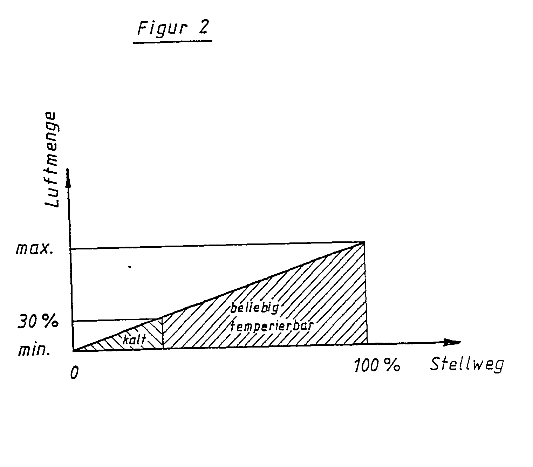

Die Temperatur-Einstellmöglichkeit im Kanal 8 bei Anwendung der beschriebenen Zwangssteuerung der Schwenkklappe 6 ist in Fig. 2 gezeigt. Bis zum genannten Bereich minimaler Strömung von etwa 30% im Kanal 8 kann erwärmte und nicht erwärmte Luft im Kanal mittels der Schwenkklappe 6 in seiner Temperatur und mittels der Sperrklappe 10 in seiner Menge gesteuert werden. Unter der Minimalmenge fließt im Kanal 8 lediglich nicht erwärmte Luft, die mit Hilfe der Sperrklappe 10 kontinuierlich bis 0 verringert werden kann.

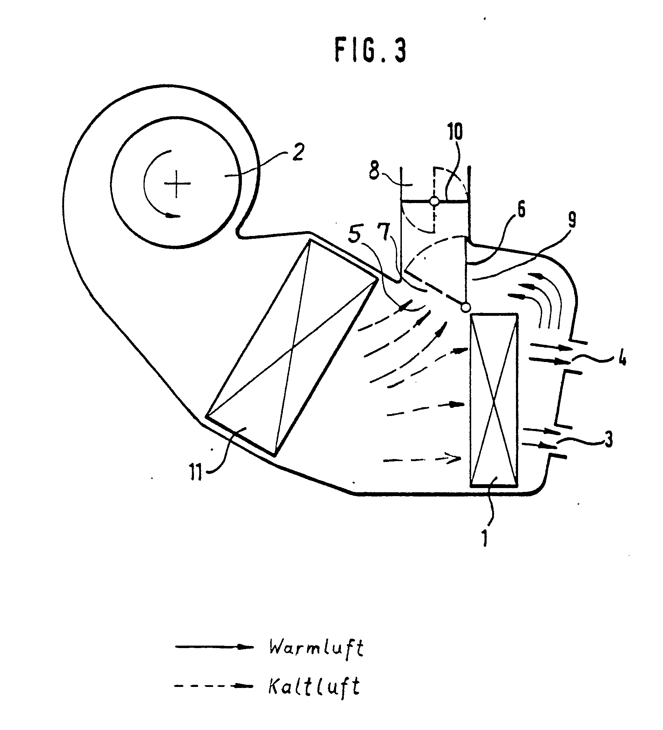

Bei der Klimaanlage nach Fig. 3 ist lediglich die äußere Form der Anlage, bedingt durch den Einbau eines Verdampfers 11, verändert. Die übrigen Bauteile sind mit gleichen Bezugszeichen wie in Fig. 1 gekennzeichnet und in ihrer Wirkungsweise identisch.

## Patentanspruch

Heiz- und/oder Klimaanlage für Kraftfahrzeuge mit in den Fahrzeuginnenraum mündenden Luftführungskanälen (3, 4 und 8) für in Menge und Temperatur steuerbare Luftströme zum Fußraum (Kanal 3), Scheibenentfrostung (Kanal 4) und Insassen-Kopfbereich (Kanal 8) und mit Steuereinrichtungen (6 und 10) zum Mischen und Absperren des zum Insassen-Kopfbereich durch einen Wärmetauscher (1) und einem zu diesem parallelen Bypass (5) führenden Luftstrom (Kanal 8), wobei der Kanal zum Fußraum (3) ausschließlich an dem Luftstrom aus dem Wärmetauscher (1) angeschlossen ist und wobei die Heizleistung des Wärmetauschers (1) mittels seines Flüssigkeitsdurchsatzes steuerbar ist, dadurch gekennzeichnet, daß zumindest ein Kanal zur Scheibenentfrostung (4) ausschließlich an dem Luftstrom aus dem Wärmetauscher (1) angeschlossen ist, daß Eintrittsöffnungen (7 und 9) vom Bypass (5) und vom Luftaustritt des Wärmetauschers (1) in den Kanal (8) zum Insassen-Kopfbereich eine einarmige Schwenkklappe (6) aufweisen, die deren Öffnungsquerschnitte in Abhängigkeit voneinander steuert, daß der Kanal (8) ein unabhängig von der Schwenkklappe (6) einstellbares Drosselorgan (Sperrklappe 10) enthält und daß die einarmige Schwenkklappe (6) und das Drosselorgan (Sperrklappe 10) im Bereich geringer Öffnungsquerschnitte des Drosselorganes derart in ihren Einstellungen gekoppelt sind, daß ab einem bestimmten geringen Öffnungsquerschnitt des Drosselorganes (Sperrklappe 10) bis zu einem noch geringeren Öffnungsquerschnitt desselben die Schwenkklappe (6) die Eintrittsöffnung (9) vom Luftaustritt des Wärmetauschers (1) in den Kanal (8) drosselt und schließt.

## Revendication

Installation de chauffage et/ou de climatisation pour véhicules automobiles avec des canaux d'amenée d'air (3, 4 et 8) pour des circulations d'air susceptibles d'être commandées en débit et en température, vers la zone des pieds (canal 3), le dégivrage des glaces (canal 4) et la zone de têtes des occupants du véhicule (canal 8), et avec des dispositifs de commande (6 et 10) pour mélanger et arrêter la circulation d'air (canal 8) arrivant à la zone de têtes des occupants du véhicule par l'intermédiaire d'un échangeur thermique (1) et d'une dérivation (5) parallèle à celui-ci, le canal aboutissant à la zone des pieds (3) étant exclusivement raccordé à la circulation d'air en provenance de l'échangeur thermique (1), tandis que la puissance de chauffe de l'échangeur thermique (1) est susceptible d'être commandée par le débit du liquide qui le traverse, installation caractérisée en ce que tout au moins un canal, pour le dégivrage des glaces (4) est exclusivement raccordé à la circulation d'air en provenance de l'échangeur thermique (1), en ce que les orifices d'entrée (7, 9) de la dérivation (5) et de la sortie d'air de l'échangeur thermique (1) dans le canal (8) aboutissant à la zone de têtes des occupants du véhicule, comportent un clapet pivotant à un bras (6) qui commande les sections transversales des orifices en fonction l'une de l'autre, le canal (8) comportant un organe d'étranglement (clapet d'arrêt) susceptible d'être réglé indépendamment du clapet pivotant (6), et le clapet pivotant à un seul bras (6) et l'organe d'étranglement (clapet d'arrêt 10) sont couplés en positionnement dans la zone de section transversale d'ouverture réduite de l'organe d'étranglement, de façon qu'à partir d'une section d'ouverture réduite déterminée de l'organe d'étranglement (clapet d'arrêt 10), jusqu'à une section transversale d'ouverture encore plus réduite de ce même organe, le clapet pivotant (6) étrangle et ferme l'orifice d'entrée (9) de la sortie d'air de l'échangeur thermique (1) dans le canal (8).

## Claim

A heating and/or air-conditioning plant for motor vehicles comprising ducts (3, 4 and 8) opening into the vehicle interior for supplying air at a controllable flow rate and temperature to the foot space (duct 3), for defrosting the windows (duct 4) and to the occupant's head area (duct 8) and control devices (6 and 10) comprising a heat exchanger (1) and a by-pass (5) parallel thereto for mixing and shutting off the air flow leading to the occupant's head area (duct 8), the duct to the foot space (3) being connected exclusively to the air flow from the heat exchanger (1), and the heating capacity of the heat exchanger (1) being controllable via the flow rate of fluid through it, characterised in that at least one duct for defrosting the windows (4) is connected exclusively to the air flow from the heat exchanger (1), in that openings (7 and 9) from the bypass (5) and from the air outlet of the heat exchanger (1) have a single-arm swivel valve (6) in the duct (8) to the head area, the valve controlling the opening cross-sections in dependence on one another, that the duct (8) contains a throttle means (shut-off valve 10) adjustable independently of the swivel valve (6), and the single-arm swivel valve (6) and the throttle means (shut-off valve 10) are coupled in their settings in the range of small opening cross-sections of the throttle means so that, between a given small opening cross-section of the throttle means (shut-off valve 10) down to an even smaller opening cross-section thereof, the swivel valve (6) throttles and closes the inlet opening (9) of the air outlet of the heat exchanger (1) into the duct (8).

# FIG.1

— → Warmluft

- - - → Kaltluft

## Figur 2

# FIG. 3

Warmluft

Kaltluft